# EUROPÄISCHE PATENTSCHRIFT

(11) **EP 0 610 843 B1**
(45) Veröffentlichungstag und Bekanntmachung des Hinweises auf die Patenterteilung: **19.05.1999**
(21) Anmeldenummer: 94101795.6
(22) Anmeldetag: 07.02.1994
(51) Int. Cl.: C08F 232/08, C07F 17/00

(54) **Verfahren zur Herstellung von Cycloolefinpolymeren**
Process for preparing cyclo-olefin polymers
Procédé de préparation de polymères de cyclo-oléfines

(30) Priorität: 12.02.1993 DE 4304293
(43) Veröffentlichungstag der Anmeldung: 17.08.1994
(73) Patentinhaber: Ticona GmbH, 65451 Kelsterbach (DE)
(72) Erfinder: Rohrmann, Jürgen, Dr., D-65779 Kelkheim/Taunus (DE); Brekner, Michael-Joachim, Dr., D-60529 Frankfurt (DE); Küber, Frank, Dr., D-61440 Oberursel (DE); Osan, Frank, Dr., D-65779 Kelkheim (DE); Weller, Thomas, Dr., D-55130 Mainz (DE)

(56) Entgegenhaltungen:
- EP-A- 0 407 870
- EP-A- 0 485 893
- EP-A- 0 503 422

## Beschreibung

Die Erfindung betrifft ein Verfahren zur Herstellung von Homo- und Copolymeren von polycyclischen Olefinen mit hohen Viskositätszahlen.

Mit Metallocen-Aluminoxan-Katalysatorensystemen können Cycloolefinhomo- und -copolymere hergestellt werden. Die Polymerisation der Cycloolefine verläuft in Masse oder Lösungsmitteln in Gegenwart von Metallocenkatalysatoren unter Erhalt der Cyclen (EP-A-503 422, EP-A-407 870 und EP-A-485 893). Als Lösungsmittel werden hauptsächlich Kohlenwasserstoffe eingesetzt.

Cycloolefincopolymere mit einer hohen Einbaurate an Cycloolefin sowie Cycloolefinhomopolymere besitzen aufgrund ihrer hohen Glastemperatur eine hohe thermische Formbeständigkeit und sind deshalb interessante Werkstoffe, die als thermoplastische Formmassen Verwendung finden. Die mechanischen Eigenschaften werden also hauptsächlich durch das Verhältnis der eingebauten Comonomere bestimmt, welches durch den Glaspunkt charakterisiert ist. Je nach Anwendung werden außerdem unterschiedliche Anforderungen an die Schmelzeviskosität des Polymers gestellt. So werden für Spritzgußanwendungen relativ niedrige Schmelzeviskositäten benötigt, während für Extrusionsanwendungen, beim Tiefziehen oder für bestimmte Folienanwendungen hohe Schmelzeviskositäten benötigt werden, um bei der Verarbeitung eine ausreichende Schmelzefestigkeit des Polymers zu gewährleisten.

Bei gegebener Verarbeitungstemperatur und Comonomerzusammensetzung steigt die Schmelzeviskosität von Cycloolefincopolymeren mit dem mittleren Molekulargewicht und damit der Viskositätszahl VZ an.

Die Viskositätszahl von Cycloolefinpolymeren wird nach dem Stand der Technik hauptsächlich durch durch Wasserstoff-Dosierung und, soweit technisch realisierbar, durch Variation der Polymerisationstemperatur gesteuert.

Zur Senkung der Viskositätszahl kann entweder eine Wasserstoffregelung vorgenommen werden oder die Polymerisationstemperatur erhöht werden. Dagegen kann die Erhöhung der Viskositätszahl nur durch Temperaturerniedrigung realisiert werden. Dem Ausmaß der Temperaturerniedrigung sind jedoch technische Grenzen gesetzt, da bei niedrigen Polymerisationstemperaturen die zeitliche Temperaturkonstanz nicht mehr gewährleistet ist. Dies ist darauf zurückzuführen, daß die Effizienz der Kühlung mit der Temperaturdifferenz zwischen Polymerisations- und Kühltemperatur ansteigt. Da aus wirtschaftlichen Gründen mit Flußwasser gekühlt wird, ist ein Polymerisationsprozess, der unter 35°C abläuft nicht mehr wirtschaftlich zu kühlen. Außerdem wird bei niedrigen Polymerisationstemperaturen die Aktivität des Katalysatorsystems und damit die Reaktionsgeschwindigkeit zu weit herabgesetzt. Mit den bisher bekannten Verfahren lassen sich vor allem Cycloolefinpolymere für Spritzgußanwendungen herstellen, die sich durch eine relativ niedrige Schmelzeviskosität auszeichnen.

Aufgabe der Erfindung war es, ein Verfahren zu finden, das Cycloolefinpolymere zugänglich macht, die bei gegebener Glastemperatur und vorgegebener Polymerisationstemperatur, insbesondere bei technisch interessanten Temperaturen (oberhalb 35°C), eine hohe Viskositätszahl aufweisen.

Es wurde gefunden, daß diese Aufgabe durch Verwendung spezieller Metallocen-Katalysatoren gelöst werden kann. Weiter wurde gefunden, daß bei Verwendung von Katalysatormischungen, die die speziellen Metallocen-Katalysatoren enthalten, Polymere mit bi- oder multimodaler Molekulargewichtsverteilung hergestellt werden können.
Die Polymerisation wird im flüssigen Cycloolefin selbst oder in Cycloolefin-Lösung durchgeführt, wobei zweckmäßigerweise der Druck oberhalb 1 bar liegt.

Die Erfindung betrifft ein Verfahren zur Herstellung eines Cycloolefinhomopolymers oder -copolymers durch Polymerisation von 0,1 bis 100 Gew.-%, bezogen auf die Gesamtmenge der Monomeren, mindestens eines polycyclischen Olefins der Formeln I, II, III, IV, V oder VI 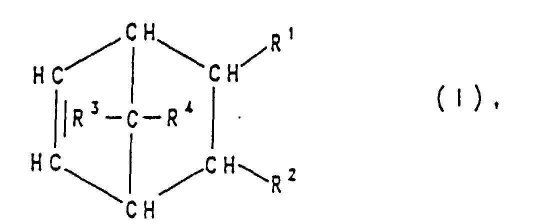 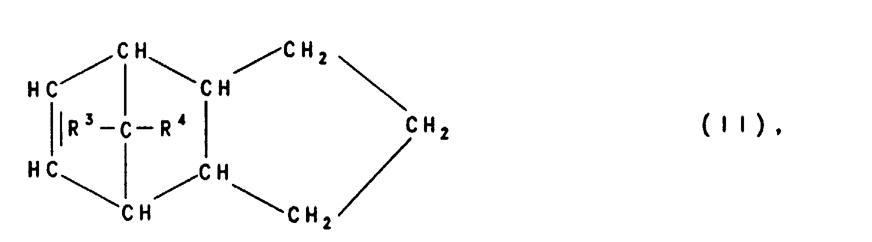 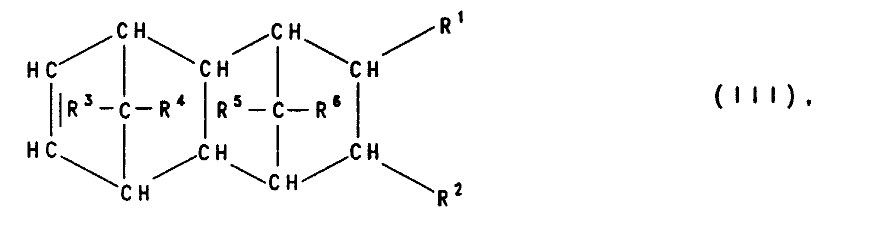 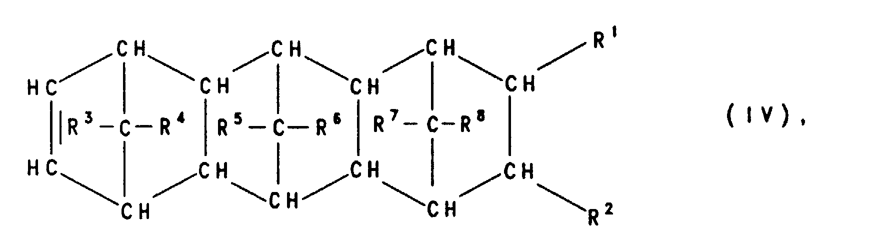 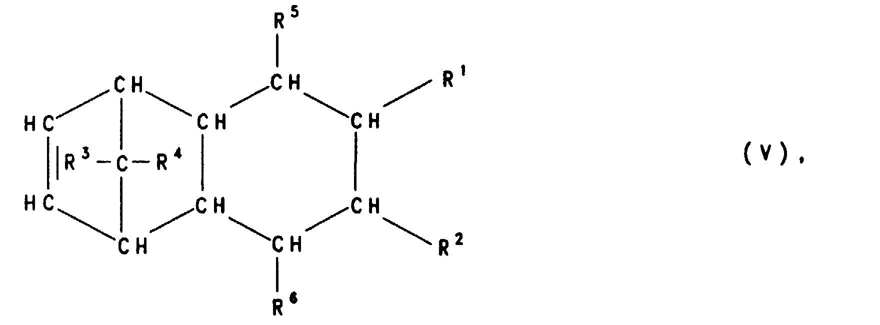 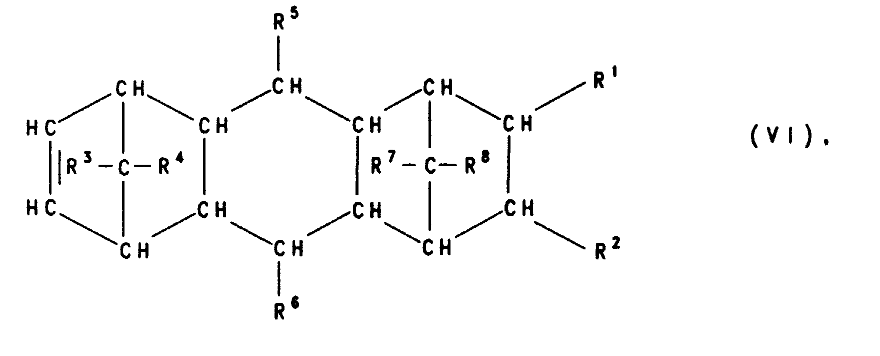 worin R¹, R², R³, R⁴, R⁵, R⁶, R⁷ und R⁸ gleich oder verschieden sind und ein Wasserstoffatom oder einen Kohlenwasserstoffrest bedeuten, wobei gleiche Reste in den verschiedenen Formeln eine unterschiedliche Bedeutung haben können, 0 bis 99,9 Gew.-%, bezogen auf die Gesamtmenge der Monomeren, eines Cycloolefins der Formel VII 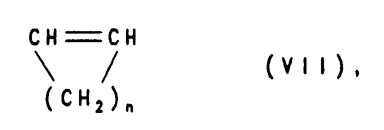 worin n eine Zahl von 2 bis 10 ist, und 0 bis 99,9 Gew.-%, bezogen auf die Gesamtmenge der Monomeren, mindestens eines acyclischen 1-Olefins der Formel VIII 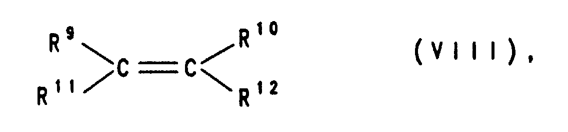 worin R⁹, R¹⁰, R¹¹ und R¹² gleich oder verschieden sind und ein Wasserstoffatom oder einen Kohlenwasserstoffrest bedeuten, bei einer Temperatur von -78 bis 150°C und einem Druck von 0,01 bis 64 bar, in Gegenwart eines Katalysators, welcher aus einem Aluminoxan der Formel IX 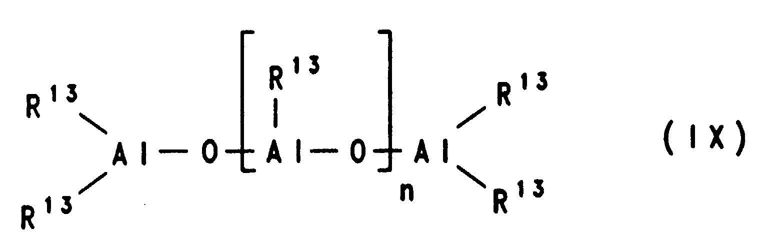 für den linearen Typ und/oder der Formel X 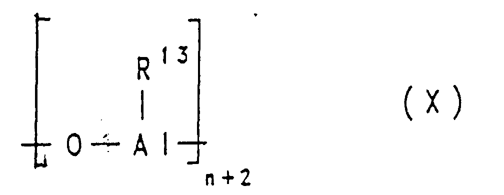 für den cyclischen Typ, wobei in den Formeln IX und X R¹³ eine C₁-C₆-Alkylgruppe oder Phenyl oder Benzyl bedeutet und n eine ganze Zahl von 2 bis 50 ist, und mindestens einem Metallocen der Formel XI 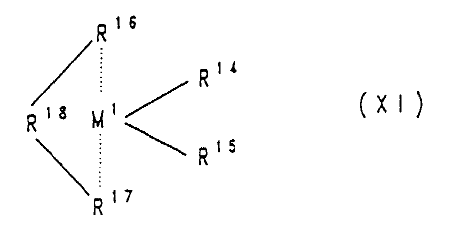 besteht, worin
- M¹: Titan, Zirkon, Hafnium, Vanadium, Niob oder Tantal ist,
- R¹⁴ und R¹⁵: gleich oder verschieden sind und ein Wasserstoffatom, ein Halgenatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe oder eine C₈-C₄₀-Arylalkenylgruppe bedeuten,
- R¹⁶: eine substituierte Fluorenylgruppe bedeutet, die einen oder mehrere Reste R²² trägt, die gleich oder verschieden sind und eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten,
- und R¹⁷: eine Cyclopentadienylgruppe bedeutet, wobei R¹⁸ 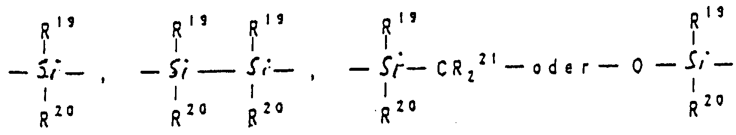 bedeutet,
worin
R¹⁹, R²⁰, und R²¹gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹⁹ und R²⁰ oder R¹⁹ und R²¹ jeweils mit den sie verbindenden Atomen einen Ring bilden.

Im erfindungsgemäßen Verfahren wird mindestens ein polycyclisches Olefin der Formeln I, II, III, IV, V oder VI vorzugsweise ein Cycloolefin der Formeln I oder III, worin R¹, R², R³, R⁴, R⁵, R⁶, R⁷ und R⁸ gleich oder verschieden sind und ein Wasserstoffatom oder einen Kohlenwasserstoffrest, bevorzugt einen C₆-C₁₀-Arylrest oder einen C₁-C₈-Alkylrest bedeuten, wobei gleiche Reste in den verschiedenen Formeln eine unterschiedliche Bedeutung haben können, polymerisiert.
Gegebenenfalls wird auch ein monocyclisches Olefin der Formel VII 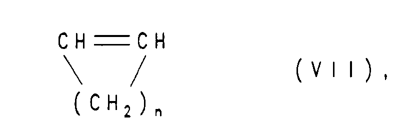 worin n eine Zahl von 2 bis 10 ist, verwendet. Ein anderes Comonomer ist ein acylisches 1-Olefin der Formel VIII, 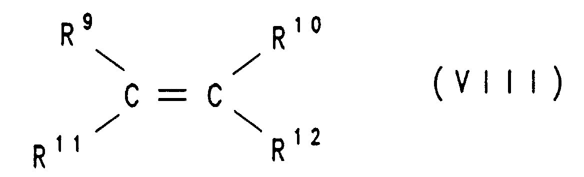 worin R⁹, R¹⁰, R¹¹ und R¹² gleich oder verschieden sind und ein Wasserstoffatom oder einen C₁-C₈-Alkylrest bedeuten. Bevorzugt sind Ethylen und Propylen.

Insbesondere werden Copolymere von polycyclischen Olefinen, vorzugsweise der Formeln I und III, mit den acyclischen Olefinen der Formel VIII hergestellt.

Besonders bevorzugte Cycloolefine sind Norbornen und Tetracyclododecen, wobei diese durch (C₁-C₆)-Alkyl substituiert sein können. Sie werden vorzugsweise mit Ethylen copolymerisiert; besondere Bedeutung besitzen Ethylen/Norbornen-Copolymere.

Das polycyclische Olefin der Formeln I, II, III, IV, V oder VI wird in einer Menge von 0,1 bis 100 Gew.-% und das monocyclische Olefin der Formel VII in einer Menge von 0 bis 99,9 Gew.-% jeweils bezogen auf die Gesamtmenge der Monomeren, eingesetzt.

Die Konzentration des acyclischen Olefins der Formel VIII ergibt sich aus der Löslichkeit des offenkettigen Olefins in dem Reaktionsmedium bei gegebenem Druck und gegebener Temperatur.

Als polycyclische Olefine, monocyclische Olefine und acyclische Olefine sind auch Gemische zweier oder mehrerer Olefine des jeweiligen Typs zu verstehen. Das heißt, es können neben polycyclischen Homopolymeren und Bicopolymeren auch Ter- und Multicopolymere nach dem erfindungsgemäßen Verfahren hergestellt werden. Auch Copolymere der Cycloolefine der Formel VII mit den acyclischen Olefinen der Formel VIII lassen sich vorteilhaft nach dem beschriebenen Verfahren erhalten.

Von den Cycloolefinen der Formel VII ist Cyclopenten, das substituiert sein kann, bevorzugt.

Der für das erfindungsgemäße Verfahren zu verwendende Katalysator besteht aus einem Aluminoxan und mindestens einem Metallocen (Übergangsmetallkomponente) der Formel Xl 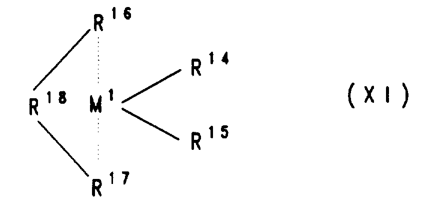 In Formel Xl ist M¹ ein Metall aus der Gruppe Titan, Zirkon, Hafnium, Vanadium, Niob und Tantal, vorzugsweise Zirkon und Hafnium. Besonders bevorzugt wird Zirkon verwendet.
- R¹⁴ und R¹⁵: sind gleich oder verschieden und bedeuten ein Wasserstoffatom, eine C₁-C₁₀-, vorzugsweise C₁-C₃-Alkylgruppe, eine C₁-C₁₀-, vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogenatom, vorzugsweise Chlor.
- R¹⁶: ist eine Fluorenylgruppe oder Indenylgruppe, bevorzugt eine (2,7-di-alkyl)Fluorenylgruppe, und R¹⁷ ist eine Cyclopentadienylgruppe.
Gegebenenfalls können auch einer oder beide Reste R¹⁶ und R¹⁷, einen oder mehrere Reste R²² tragen, die gleich oder verschieden sind und eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten. Besonders bevorzugt ist R¹⁶ eine (2,7-di-tert.butyl)-Fluorenylgruppe.
- R¹⁸: ist eine ein- oder mehrgliedrige Brücke, welche die Reste R¹⁶ und R¹⁷ verknüpft und bedeutet 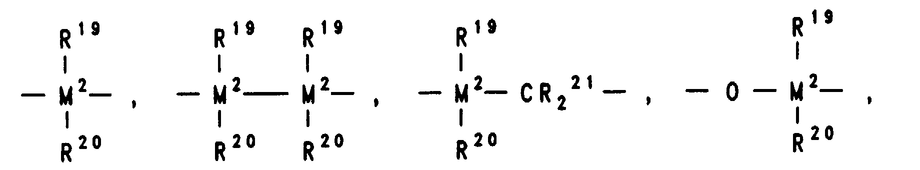 worin M² Silizium ist und R¹⁹, R²⁰, und R²¹ gleich oder verschieden sind und ein Wasserstoffatom, ein Halogenatom, eine C₁-C₁₀-Alkylgruppe, vorzugsweise eine C₁-C₄-Alkylgruppe, besonders bevorzugt eine Methylgruppe, eine C₁-C₁₀-Fluoralkylgruppe, eine C₆-C₁₀-Arylgruppe, bevorzugt eine Phenylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹⁹ und R²⁰ oder R¹⁹ und R²¹ jeweils mit den sie verbindenden Atomen einen Ring bilden.

Bevorzugt ist R¹⁸ ein Rest besonders bevorzugt sind

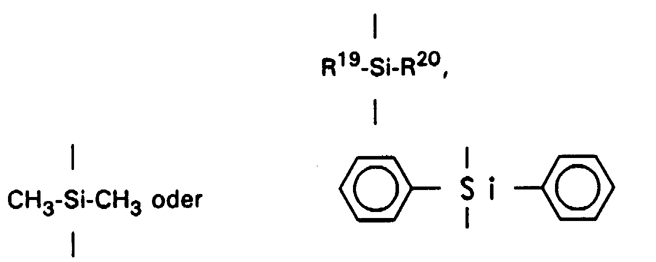

Bevorzugt eingesetzte Metallocene sind:

Dimethylsilandiyl-(9-fluorenyl)-cyclopentadienyl-zirkondichlorid, Dimethylsilandiyl-(9-(2,7-di-tert.butyl)fluorenyl)-cyclopentadienyl-zirkondichlorid, 1-Silacyclobutyl-(9-fluorenyl)-cyclopentadienyl-zirkondichlorid, Dibenzylsilandiyl-(9-fluorenyl)-cyclopentadienyl-zirkondichlorid oder Gemische aus mindestens zwei dieser Katalysatoren.

Besonders geeignet ist:
Dimethylsilandiyl-(9-(2,7-di-tert.butyl)fluorenyl)-cyclopentadienyl-zirkondichlorid.

Die Substitution des Fluorens erfolgt durch literaturbekannte Syntheseschritte (Liebigs Ann. 1976, Seite 74; Synthesis 1984, Seite 335 auf die hiermit ausdrücklich Bezug genommen wird); weiter werden die verbrückten Metallocene z.B. nach den aus der EP 485893 bekannten Reaktionsschemata hergestellt.

Das Aluminoxan hat bevorzugt die Formel IX und/oder Formel X. In diesen Formeln können die Reste R¹³ gleich oder verschieden sein und bedeuten eine C₁-C₆-Alkylgruppe, vorzugsweise Methyl, Ethyl oder Isobutyl, Butyl oder Neopentyl, oder Phenyl oder Benzyl. Besonders bevorzugt ist Methyl. n ist eine ganze Zahl von 0 bis 50, bevorzugt 5 bis 40.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z.B. Toluol) umgesetzt wird. Zur Herstellung eines Aluminoxans mit verschiedenen Alkylgruppen R¹³ werden entsprechend der gewünschten Zusammensetzung zwei verschiedene Aluminiumtrialkyle (AIR₃ + AIR'₃) mit Wasser umgesetzt (vgl. S. Pasynkiewicz, Polyhedron 9 (1990) 429 und EP-A 302 424 auf die hiermit ausdrücklich Bezug genommen wird).

Die genaue räumliche Struktur der Aluminoxane ist nicht bekannt.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist auch möglich, das Aluminoxan auf einen Träger aufzubringen und es dann als Suspension in geträgerter Form einzusetzen. Es sind mehrere Trägerungsverfahren bekannt (EP 92107331.8), z.B. kann Kieselgel als Träger fungieren.

Es ist möglich, das Metallocen vor dem Einsatz in der Polymerisationsreaktion mit einem Aluminoxan der Formel IX und/oder X vorzuaktivieren. Dadurch wird die Polymerisationsaktivität deutlich erhöht.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von 10⁻⁴- 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78°C bis 150°C, vorzugsweise 0 bis 70°C.

Das Metallocen wird bevorzugt in Form des Racemats eingesetzt. Es kann auch vorpolymerisiert oder auf einen Träger aufgebracht werden. Zur Vorpolymerisation wird bevorzugt das (oder eines der) in der Polymerisation eingesetzte(n) Olefin(e) verwendet.

Geeignete Träger sind beispielsweise Silikagele, Aluminiumoxide, festes Aluminoxan oder andere anorganische Trägermaterialien. Ein geeignetes Trägermaterial ist auch ein Polyolefinpulver in feinverteilter Form.

Eine weitere mögliche Ausgestaltung des erfindungsgemäßen Verfahrens besteht darin, daß man an Stelle oder neben einem Aluminoxan eine salzartige Verbindung der Formel RₓNH₄₋ₓBR'₄ oder der Formel R₃PHBR'₄ als Cokatalysator verwendet. Dabei sind x = 1, 2 oder 3, R = Alkyl oder Aryl, gleich oder verschieden, und R' = Aryl, das auch fluoriert oder teilfluoriert sein kann. In diesem Fall besteht der Katalysator aus dem Reaktionsprodukt eines Metallocens mit einer der genannten Verbindungen (EP 277 004).

Falls dem Reaktionsgemisch Lösemittel zugesetzt wird, dann handelt es sich um gebräuchliche inerte Lösemittel wie z.B. aliphatische oder cycloaliphatische Kohlenwasserstoffe, Benzin- bzw. hydrierte Dieselölfraktionen oder Toluol.

Die Metallocenverbindung wird in einer Konzentration, bezogen auf das Übergangsmetall, von 10⁻³ bis 10⁻⁸, vorzugsweise 10⁻⁴ bis 10⁻⁷ mol Übergangsmetall pro dm³ Reaktorvolumen angewendet. Das Aluminoxan wird in einer Konzentration von 10⁻⁴ bis 10⁻¹, vorzugsweise 10⁻⁴ bis 2 : 10⁻² mol pro dm³ Reaktorvolumen verwendet, bezogen auf den Gehalt an Aluminium. Prinzipiell sind aber auch höhere Konzentrationen möglich.

Bei der Herstellung von Copolymerisaten kann die Variation der Molverhältnisse des polycyclischen Olefins zum eingesetzten offenkettigen Olefin in einem weiten Bereich erfolgen. Bevorzugt werden molare Verhältnisse von 3:1 bis 100:1 Cycloolefin zu offenkettigem Olefin eingesetzt. Durch die Wahl der Polymerisationstemperatur, durch die Konzentration der Katalysatorkomponenten und das eingesetzte Molverhältnis bzw. den Druck des gasförmigen, offenkettigen Olefins läßt sich die Einbaurate an Comonomer beinahe beliebig steuern. Bevorzugt werden Einbauraten zwischen 20 und 80 Mol-% der cyclischen Komponenten und besonders bevorzugt werden Einbauraten zwischen 40 und 60 Mol-% der cyclischen Komponenten.

Die Polymerisation kann auch mehrstufig erfolgen, wobei auch Blockcopolymere entstehen können (P 42 05 416.8).

Die mittlere Molmasse des gebildeten Polymeren läßt sich weiter durch Wasserstoff-Dosierung oder Variation der Temperatur in bekannter Weise steuern.

Berücksichtigt man die Möglichkeiten der Erniedrigung der Molmasse durch Wasserstoff-Regelung, so wird durch das erfindungsgemäße Verfahren der zugängliche Molekulargewichtsbereich bei den extrusionstauglichen Cycloolefincopolymeren deutlich erweitert.

Die Polymerisation wird bevorzugt bei Temperaturen von 35 bis 100°C, besonders bevorzugt bei Temperaturen von 60 bis 80°C durchgeführt. Die erfindungsgemäß hergestellten Cycloolefincopolymere weisen Viskositätszahlen im Bereich von 150 bis 600 cm³/g, bevorzugt von 170 bis 500 cm³/g und Glastemperaturen im Bereich von 80 bis 250°C, bevorzugt von 125 bis 220°C, besonders bevorzugt von 140 bis 190°C auf. Sie eignen sich besonders zur Herstellung von Extrusionsteilen wie Folien, Schläuchen, Rohren, Stangen und Fasern. Eine weitere Eigenschaft der erfindungsgemäß hergestellten Materialien ist ihre Transparenz. Dadurch kommt besonders den optischen Anwendungen der extrudierten Teile aus diesen Materialien eine große Bedeutung zu. Der mit einem Abbe-Refraktometer und Mischlicht bestimmte Brechungsindex der in den nachfolgenden Beispielen beschriebenen Reaktionsprodukte liegt im Bereich zwischen 1,520 und 1,555. Nachdem der Brechungsindex sehr nahe an dem von Kronglas (n = 1,51) liegt, können die erfindungsgemäßen Produkte als Glasersatz verschiedene Anwendungen finden wie beispielsweise Linsen, Prismen, Trägerplatten und -folien für optische Datenspeicher als Deck- und Fokussierscheiben für Solarzellen, als Deck- und Streuscheiben für Leistungsoptiken, als Lichtwellenleiter in der Form von Fasern oder Folien.

In schlagzähmodifizierter Form sind die erfindungsgemäßen Materialien als Strukturwerkstoff in verschiedenen technischen Bereichen einsetzbar (P 42 13 219.3).

Die nach dem erfindungsgemäßen Verfahren hergestellten Cycloolefinpolymeren sind auch für die Herstellung von Polymerlegierungen einsetzbar. Die Legierungen können in der Schmelze oder in Lösung hergestellt werden. Die Legierungen weisen jeweils eine für bestimmte Anwendungen günstige Eigenschaftskombination der Komponenten auf. Für Legierungen mit den erfindungsgemäßen Polymeren sind folgende Polymere einsetzbar:

Polyethylen, Polypropylen, (Ethylen-Propylen)-Copolymere, Polybutylen, Poly-(4-methyl-1-penten), Polyisopren, Polyisobutylen, Naturkautschuk, Poly(methylmethacrylat), weitere Polymethacrylate, Polyacrylate, (Acrylat-Methacrylat)-Copolymere, Polystyrol, (Styrol-Acrylnitril)-Copolymere, Bisphenol-A-Polycarbonat, weitere Polycarbonate, aromatische Polyestercarbonate, Polyethylenterephthalat, Polybutylenterephthalat, amorphe Polyarylate, Nylon-6, Nylon-66, weitere Polyamide, Polyaramide, Polyetherketone, Polyoxymethylen, Polyoxyethylen, Polyurethane, Polysulfone, Polyethersulfone, Polyvinylidenfluorid.

Die in den folgenden Beispielen angegebenen Glastemperaturen Tg wurden mittels DSC (Differential Scanning Calorimetry) bei einer Aufheizrate von 20°C/min bestimmt. Die angegebenen Viskositätszahlen wurden gemäß DIN 53 728 ermittelt.

### Beispiel 1:

Ein 1,5-dm³-Reaktor wurde mit Ethylen gefüllt und mit 600 cm³ einer 85 gewichtsprozentigen Lösung von Norbornen in Toluol gefüllt. Durch mehrfaches Aufdrücken von Ethylen (6 bar) wurde die Lösung mit Ethylen gesättigt. Es wurde ein Druck von 6.0 bar (Überdruck) eingestellt, 5 cm³ toluolische Methylaluminoxanlösung (10,1 Gew.-% Methylaluminoxan des Molekulargewichts 1300 g/Mol nach kryoskopischer Bestimmung) in den Reaktor gegeben und 15 min bei 70°C gerührt. Eine Lösung von 0,1 mg Dimethylsilyl-(9-(2,7-di-tert.butyl)fluorenyl)-cyclopentadienylzirkondichlorid in 5 cm³ toluolischer Methylaluminoxanlösung wurde nach 15 minütiger Voraktivierung zugegeben.

Unter Rühren (750 UPM) wurde eine Stunde bei 70°C polymerisiert, wobei der Ethylendruck durch Nachdosieren bei 6,0 bar gehalten wurde.

Die Reaktionslösung wurde in ein Gefäß abgelassen und schnell in 5 dm³ Aceton eingetragen, 10 min gerührt und anschließend das ausgefallene Produkt filtriert. Der Filterkuchen wurde mehrfach mit 10 %-iger Salzsäure und Aceton im Wechsel gewaschen. Abschließend wurde neutral gewaschen und mit Aceton gerührt. Das so gewaschene Polymer wird abfiltriert und bei 80°C und einem Druck von 0,2 bar 15 Stunden getrocknet.

Es wurden 13 g eines farblosen Polymers erhalten. An dem Polymer wurde eine Viskositätszahl VZ von 259 cm³/g und eine Glastemperatur Tg von 142°C gemessen.

### Beispiele 2, 3, 4 und 5:

Die Polymerisationen wurden analog Beispiel 1 durchgeführt, wobei der Katalysator oder die Polymerisationsbedingungen gemaß Tabelle 1 variiert wurden.

### Beispiel 6 (Vergleichsbeispiel zu Beispiel 1):

Ein 1,5-dm³-Reaktor wurde mit Ethylen gefüllt und mit 600 cm³ einer 85 gewichtsprozentigen Lösung von Norbornen in Toluol gefüllt. Durch mehrfaches Aufdrücken von Ethylen (6 bar) wurde die Lösung mit Ethylen gesättigt. Es wurde ein Druck von 6.0 bar (Überdruck) eingestellt, 5 cm³ toluolische Methylaluminoxanlösung (10,1 Gew.-% Methylaluminoxan der Molmasse 1300 g/Mol nach kryoskopischer Bestimmung) in den Reaktor gegeben und 15 min bei 70°C gerührt. Eine Lösung von 2,5 mg Diphenylmethylen-(9-fluorenyl)-cyclopentadienylzirkondichlorid in 5 cm³ toluolischer Methylaluminoxanlösung wurde nach 15 minütiger Voraktivierung zugegeben.

Unter Rühren (750 UPM) wurde eine Stunde bei 70°C polymerisiert, wobei der Ethylendruck durch Nachdosieren bei 6,0 bar gehalten wurde.

Die Reaktionslösung wurde in ein Gefäß abgelassen und schnell in 5 dm³ Aceton eingetragen, 10 min gerührt und anschließend das ausgefallene Produkt filtriert. Der Filterkuchen wurde mehrfach mit 10 %-iger Salzsäure und Aceton im Wechsel gewaschen. Abschließend wurde neutral gewaschen und mit Aceton gerührt. Das so gewaschene Polymer wird abfiltriert und bei 80°C und einem Druck von 0,2 bar 15 Stunden getrocknet.

Es wurden 31 g eines farblosen Polymers erhalten. An dem Polymer wurde eine Viskositätszahl VZ von 122 cm³/g und eine Glastemperatur Tg von 156°C gemessen.

### Beispiel 7: (Massepolymerisation)

Ein trockener 1,5-dm³-Polymerisationsreaktor mit Rührer wurde mit Stickstoff und dann mit Ethylen gespült und mit 560 g Norbornen-Schmelze bei 70°C gefüllt. Unter Rühren wurde dann der Reaktor auf einer Temperatur von 70°C gehalten und 6 bar Ethylen (Überdruck) aufgedrückt.

Danach wurden 5 cm³ toluolische Methylaluminoxanlösung (10,1 Gew.-% Methylaluminoxan mit Molmasse 1300 g/mol nach kryoskopischer Bestimmung) in den Reaktor dosiert und die Mischung 15 min bei 70°C gerührt, wobei durch Nachdosieren der Ethylendruck bei 6 bar gehalten wurde. Parallel dazu wurden 0,1 mg Dimethylsilyl-(9-(2,7-di-tert.butyl)fluorenyl)-cyclopentadienylzirkondichlorid in 5 cm³ toluolischer Methylaluminoxanlösung gelöst und durch 15-minütiges Stehenlassen voraktiviert. Dann wurde die Lösung des Komplexes in den Reaktor dosiert. Unter Rühren (750 UPM) wurde dann 1 Stunde bei 70°C polymerisiert, wobei der Ethylendruck durch Nachdosieren bei 6 bar gehalten wurde.
Danach wurde die Reaktionslösung in ein Gefäß abgelassen und schnell in 5 dm³ Aceton eingetragen, 10 min gerührt und anschließend filtriert.

Der erhaltene Feststoff wurde mehrfach mit 10 %iger Salzsäure und Aceton im Wechsel gewaschen, anschließend neutral gewaschen und nochmals mit Aceton gerührt. Das erneut filtrierte Polymer wurde bei 80°C und einem Druck von 0,2 bar 15 Stunden getrocknet.

Es wurden 15 g eines farblosen Polymers erhalten. Es wurde eine Viskositätszahl VZ von 271 cm³/g und eine Glastemperatur Tg von 149°C gemessen.

### Beispiel 8 (Vergleichsbeispiel zu Beispiel 7):

Die Polymerisationen wurden analog Beispiel 7 durchgeführt, wobei ein anderer Katalysator verwendet wurde (Tabelle 1).

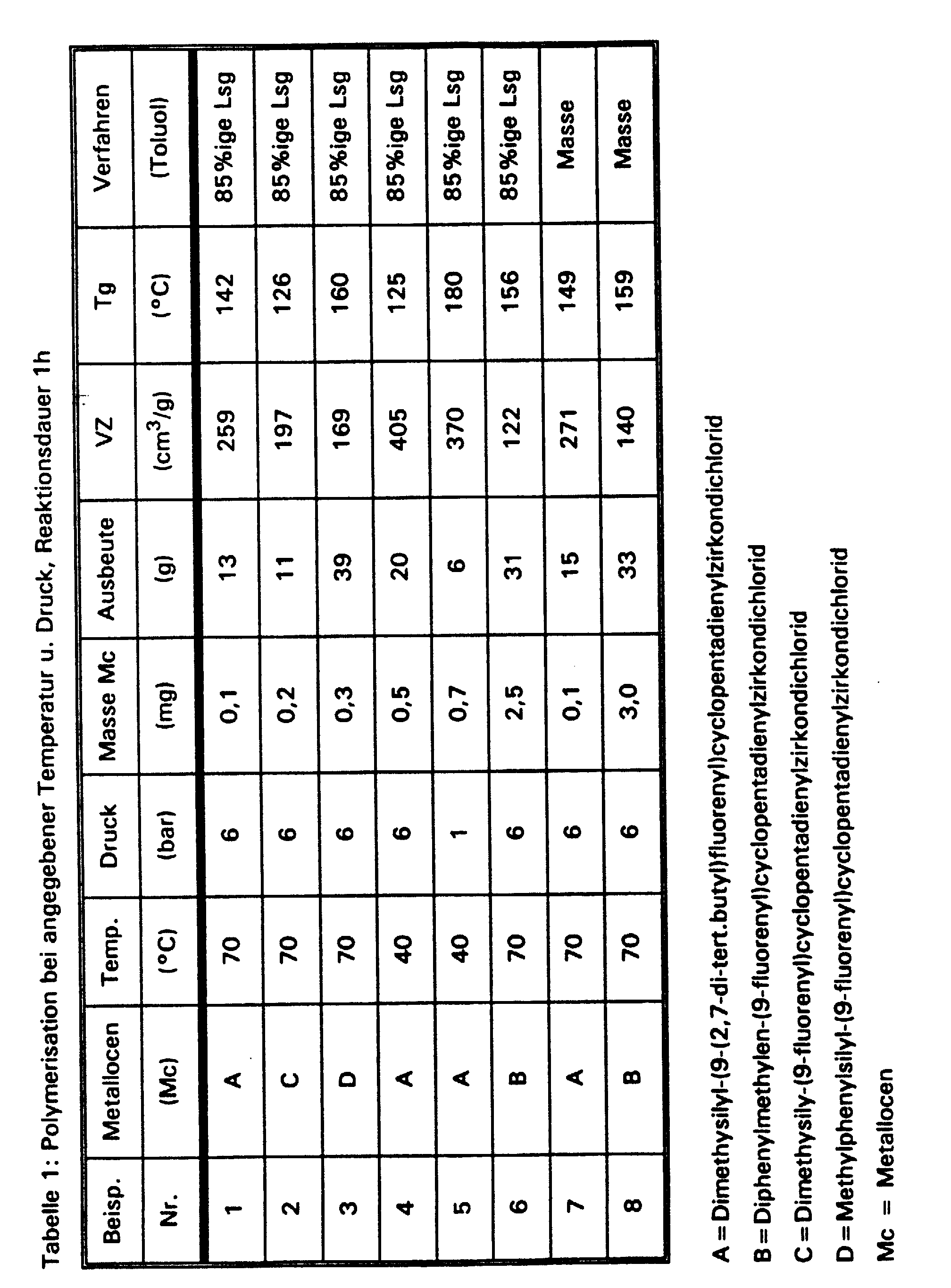

### Beispiel 9:

### Dimethylsilandiyl(2,7-di-tert.-butyl-fluorenyl)cylopentadienylzirkondichlorid

1. 2,7-Di-tert.-butylfluorenyl (1)
   Die Herstellung von 1 erfolgte in Analogie zu: Synthesis, 1984, 335, auf hier ausdrücklich Bezug genommen wird.
2. Dimethyl(2,7-di-tert.-butyl-fluorenyl)chlorsilan (2)
   Zu 15 g (54 mmol) 1 in 80 cm³ O₂- und H₂O-freiem Toluol und 5 cm³ O₂-und H₂O-freiem Et₂O unter Argon wurden bei Raumtemperatur 21,6 ml (54 mmol) einer 2,5 M Lsg. von Butyllithium in Hexan getropft und 2 h bei Raumtemperatur weiter gerührt. Anschließend wrude das Lithiumsalz bei Raumtemperatur zu einer Lsg. von 19,5 ml (162 mmol) Dichlordimethylsilan in 35 ml O₂- und H₂O-freiem Toluol getropft und 15 h weiter gerührt. Anschließend wurde das ausgefallene Lithiumchlorid abfiltriert und Lösemittel i.V. entfert. Der Rückstand wurde aus 50 ml heißem Hexan umkristallisiert. Nach Filtration und Waschen mit kaltem Hexan wurden 12,4 g (62 %) als farblose Kristalle erhalten.
   Das ¹H-NMR (in CDCl₃ gemessen) weist folgende Signale auf (in ppm): 7,3 - 7,5 (m, 6H, arom. H), 4,0 (s, 1H, Flu-H), 1,4 (s, 18H, t-Bu-CH₃), 0,1 (s, 6H, Si-CH₃).
3. Dimethyl(2,7-di-tert.-butyl-fluorenyl)cyclopentadienylsilan (3)
   Zu 1,4 g (21 mmol) Cyclopentadien in 45 ml O₂- und H₂O-freiem THF wurden bei 0°C unter Argon 8,5 ml (21 mmol) einer 2,5 M Lsg. von Butyllithium in Hexan getropft und 2 h bei Raumtemperatur weiter gerührt. Diese Lsg. wurde anschließend im Verlauf von 2 bei Raumtemperatur zu einer Lsg. von 7,9 g (21 mmol) 2 in 100 ml O₂- und H₂O-freiem THF und 1 h bei Raumtemperatur nachgerührt. Es wurden 50 ml H₂O zugegeben, die Phasen getrennt und die wässr. Phase 2mal mit je 30 ml Et₂O nachextrahiert. Die vereinigten organischen Phasen wurden getrocknet (MgSO₄) und das Lösemittel im Vakuum entfernt. Nach Chromatographie an 200 g Kieselgel (Hexan/Methylenchlorid 20:1) wurden 4,4 g (51 %) 3 als farbloses Öl erhalten.
   Das ¹H-NMR (in CDCl₃ gemessen) weist folgende Signale auf (in ppm): 7,3 - 7,8 (m, 6H, arom. H), 6,0 - 6,7(m, 3H, Cp-H), 3,9 (s, 1H, Flu-H), 3,1 und 2,9 (m, 2H, Cp-H), 1,4 (s, 18H, t-Bu-CH₃), -0,1 und -0,3 (d, 6H, Si-CH₃).
4. Dimethylsilandiyl(2,7-di-tert.-butyl-fluorenyl)cylopentadienylzirkondichlorid (4)
   Zu 6,4 g (10,9 mmol) 4 in 50 ml O₂- und H₂O-freiem Et₂O unter Argon wurden bei Raumtemperatur 10 ml (25 mmol) einer 2,5 M Lsg. von Butyllithium in Hexan gegeben und 18 h bei Raumtemperatur nachgerührt. Das Lösemittel wurde i.V. entfernt, der Rückstand mehrmals mit Hexan gewaschen und anschließend 2 h bei 0,1 Torr und 40 °C getrocknet. Das Dilithiosalz wurde in 30 ml O₂-und H₂O-freiem Toluol suspendiert und bei -30°C mit 2,56 g (11 mmol) ZrCl₄ versetzt. Es wurde nach 2 h bei Raumtemperatur weiter gerührt und anschließend über eine G3-Fritte filtriert. Das Filtrat wurde bis zur Trübung mit Hexan versetzt und bei -35°C kristallisieren lassen. Es wurden 0,49 g (12 %) 4 als gelborange Kristalle erhalten.
   Das ¹H-NMR (in CDCl₃ gemessen) weist folgende Signale auf (in ppm): 7,4 - 8,1 (m, 6H, arom. H), 6,6 und 5,6 (m, je 2H, Cp-H), 1,3 (s, 18H, t-Bu-CH₃),1,1 (s, 6H, Si-CH₃).
   Die massenspektroskopisch bestimmte Molmasse beträgt 560 g/mol.

## Patentansprüche

1. Verfahren zur Herstellung eines Cycloolefinhomopolymers oder -copolymers durch Polymerisation von 0,1 bis 100 Gew.-%, bezogen auf die Gesamtmenge der Monomeren, mindestens eines polycyclischen Olefins der Formeln I, II, III, IV, V oder VI 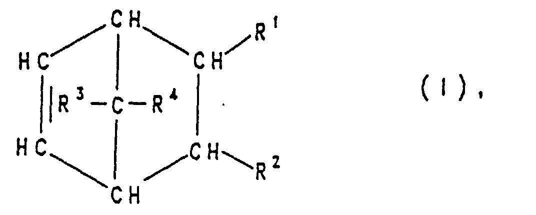 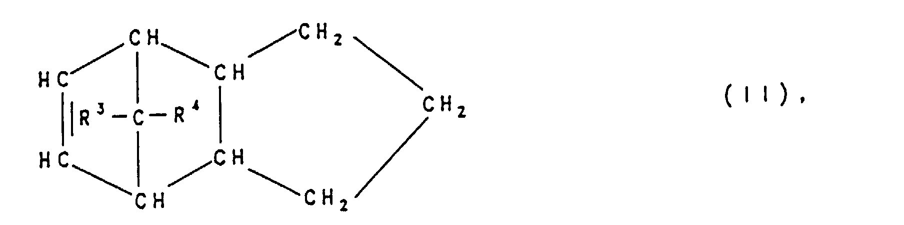 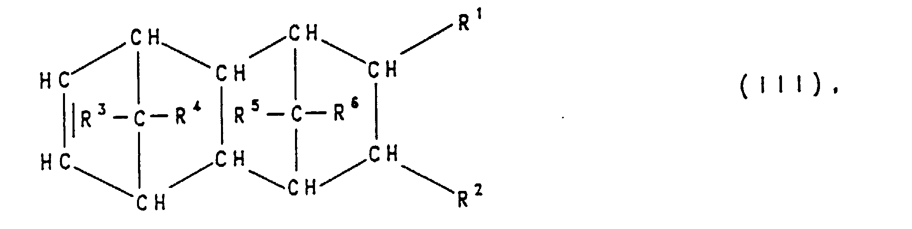 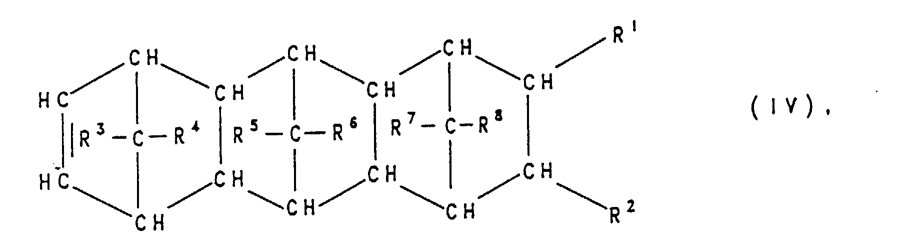 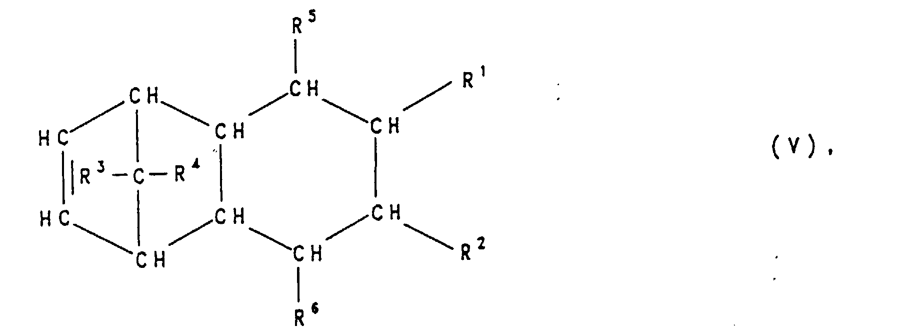 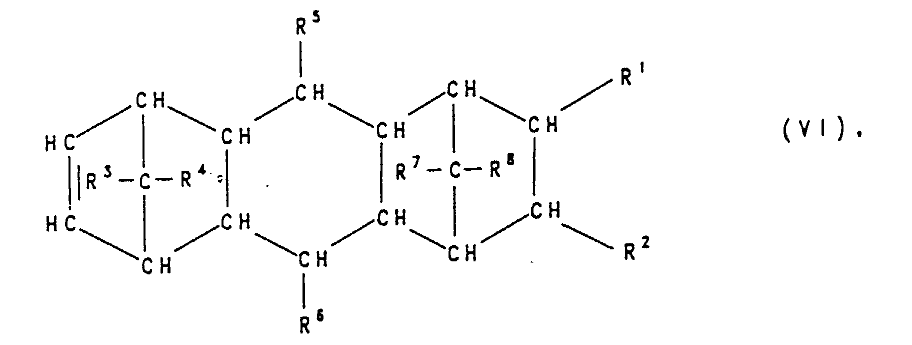 worin R¹, R², R³, R⁴, R⁵, R⁶, R⁷ und R⁸ gleich oder verschieden sind und ein Wasserstoffatom oder einen Kohlenwasserstoffrest bedeuten, wobei gleiche Reste in den verschiedenen Formeln eine unterschiedliche Bedeutung haben können, 0 bis 99,9 Gew.-%, bezogen auf die Gesamtmenge der Monomeren, eines Cycloolefins der Formel VII 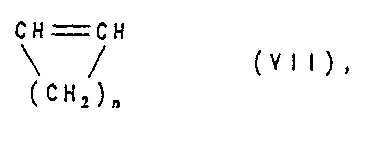 worin n eine Zahl von 2 bis 10 ist, und 0 bis 99,9 Gew.-%, bezogen auf die Gesamtmenge der Monomeren, mindestens eines acyclischen 1-Olefins der Formel VIII 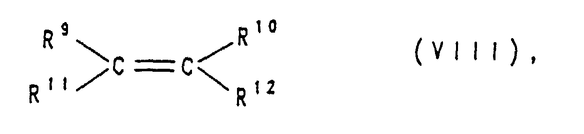 worin R⁹, R¹⁰, R¹¹ und R¹² gleich oder verschieden sind und ein Wasserstoffatom oder einen Kohlenwasserstoffrest bedeuten, bei Temperaturen von 20 bis 150°C und einem Druck von 0,01 bis 64 bar, in Gegenwart eines Katalysators, welcher aus einem Aluminoxan der Formel IX 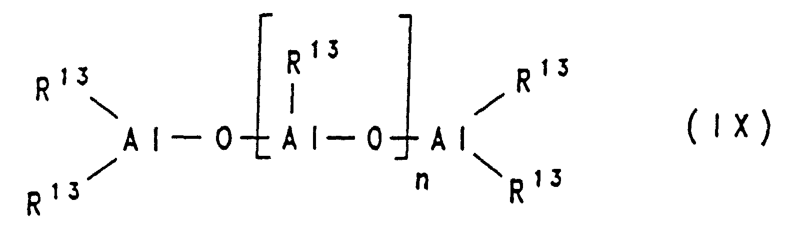 für den linearen Typ und/oder der Formel X 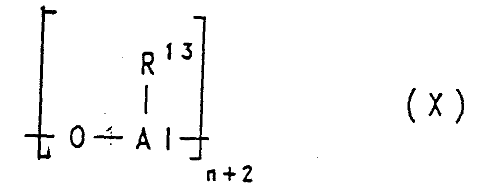 für den cyclischen Typ, wobei in den Formeln IX und X R¹³ eine C₁-C₆-Alkylgruppe oder Phenyl oder Benzyl bedeutet und n eine ganze Zahl von 2 bis 50 ist, und mindestens einem Metallocen der Formel XI 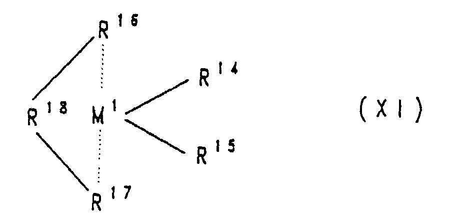 besteht, worin
M¹ Titan, Zirkon, Hafnium, Vanadium, Niob oder Tantal ist,
R¹⁴ und R¹⁵ gleich oder verschieden sind und ein Wasserstoffatom, ein Halgenatom, eine C₁-C₁₀-Alkylgruppe, eine C₁-C₁₀-Alkoxygruppe, eine C₆-C₁₀-Arylgruppe, eine C₆-C₁₀-Aryloxygruppe,eine C₂-C₁₀-Alkenylgruppe, eine C₇-C₄₀-Arylalkylgruppe oder eine C₈-C₄₀-Arylalkenylgruppe bedeuten,
R¹⁶ eine substituierte Fluorenylgruppe bedeutet, die einen oder mehrere Reste R²² trägt, die gleich oder verschieden sind und eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten,
und R¹⁷ eine Cyclopentadienylgruppe bedeutet, wobei R¹⁸ 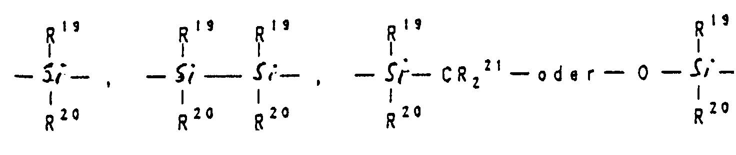
bedeutet, worin
R¹⁹, R²⁰, und R²¹ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹⁹ und R²⁰ oder R¹⁹ und R²¹ jeweils mit den sie verbindenden Atomen einen Ring bilden.

2. Verfahren gemäß Anspruch 1, wobei im flüssigen Cycloolefin selbst oder in Cycloolefin-Lösung polymerisiert wird.

3. Verfahren gemäß Anspruch 1 oder 2, wobei als Metallocen der Formel Xl Dimethylsilandiyl-(9-(2,7-di-tert. butyl)fluorenyl)-cyclopentadienyl-zirkondichlorid oder Gemische mit mindestens einem anderen Metallocen verwendet werden.

4. Verfahren gemäß einem oder mehreren der Ansprüche 1 bis 3, wobei das polycyclische Olefin Norbornen oder Tetracyclododecen ist.

5. Verfahren gemäß einem oder mehreren der Ansprüche 1 bis 4, wobei ein Copolymer aus Norbornen und Ethylen hergestellt wird.

## Claims

1. A process for preparing a cycloolefin homopolymer or copolymer by polymerization of from 0.1 to 100% by weight, based on the total amount of monomers, of at least one polycyclic olefin of the formulae I, II, III, IV, V or VI 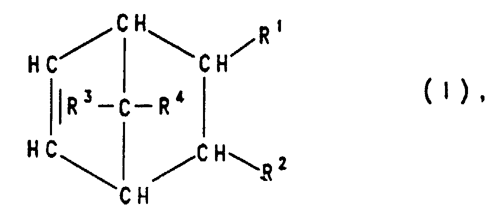 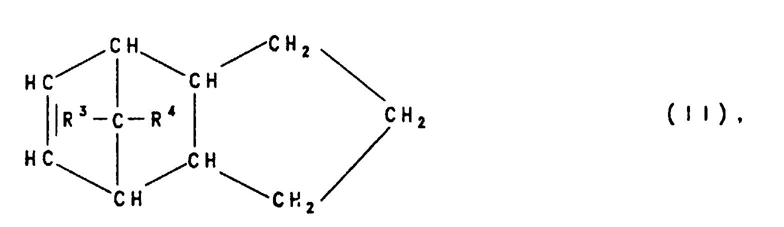 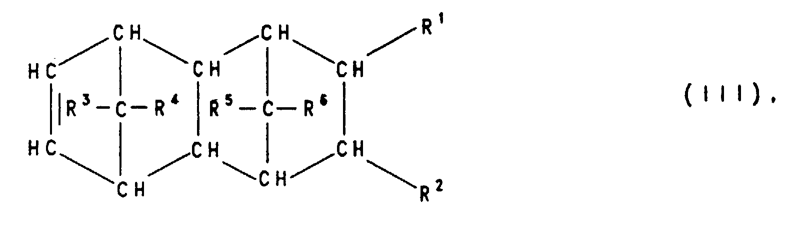 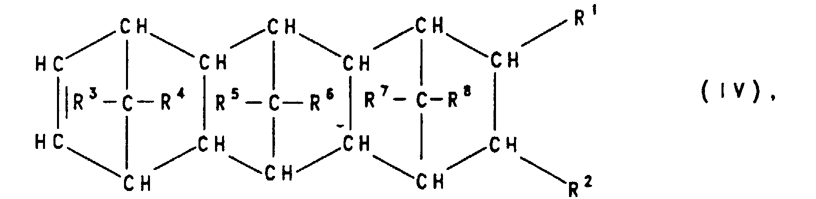 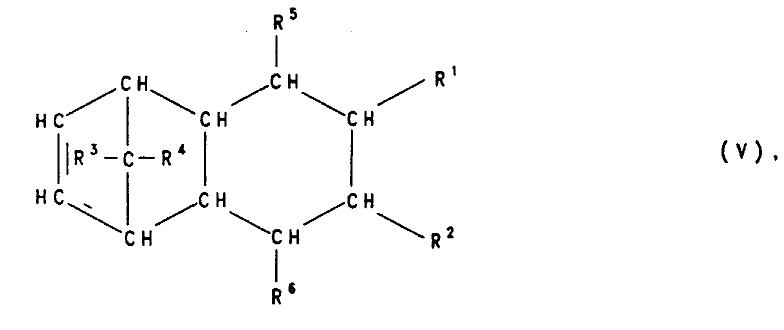 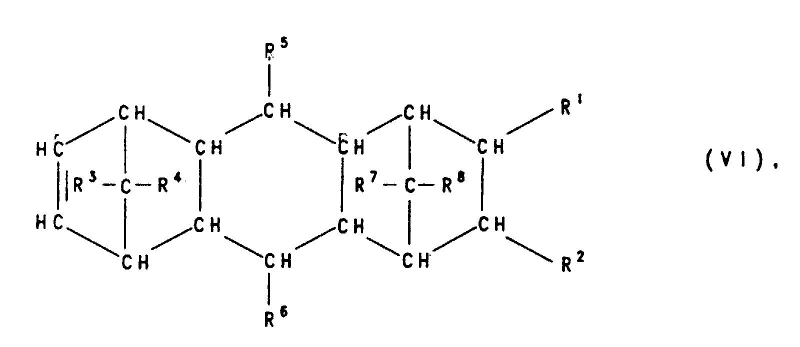 in which R¹, R², R³, R⁴, R⁵, R⁶, R⁷ and R⁸ are identical or different and are a hydrogen atom or a hydrocarbon radical, with the same radicals in the various formulae being able to have a different meaning, from 0 to 99.9% by weight, based on the total amount of monomers, of a cycloolefin of the formula VII 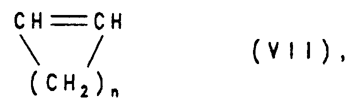 in which n is a number from 2 to 10, and from 0 to 99.9% by weight, based on the total amount of monomers, of at least one acyclic 1-olefin of the formula VIII 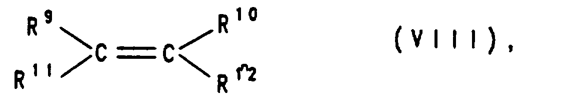 in which R⁹, R¹⁰, R¹¹ and R¹² are identical or different and are a hydrogen atom or a hydrocarbon radical, at temperatures of from 20 to 150°C and a pressure of from 0.01 to 64 bar, in the presence of a catalyst which comprises an aluminoxane of the formula IX 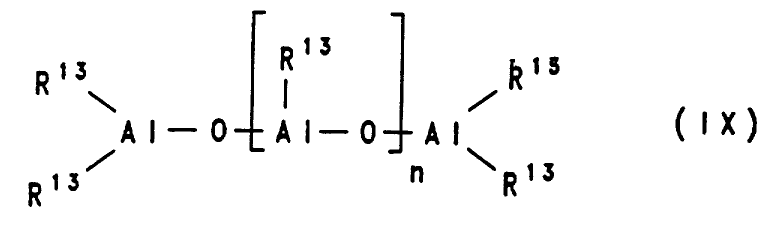 for the linear type and/or of the formula X 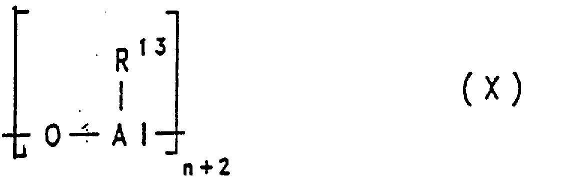 for the cyclic type, where, in the formulae IX and X, R¹³ is a C₁-C₆-alkyl group or phenyl or benzyl and n is an integer from 2 to 50, and at least one metallocene of the formula XI 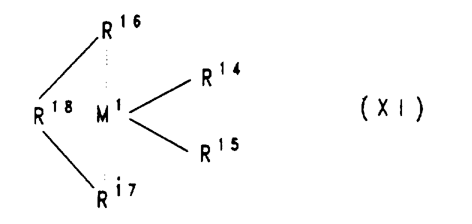 in which
M¹ is titanium, zirconium, hafnium, vanadium, niobium or tantalum,
R¹⁴ and R¹⁵ are identical or different and are a hydrogen atom, a halogen atom, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group or a C₈-C₄₀-arylalkenyl group,
R¹⁶ is a substituted fluorenyl group which bears one or more radicals R²² which are identical or different and are a C₁-C₁₀-alkyl group, a C₁-C₁₀-fluoroalkyl group, a C₆-C₁₀-fluoroaryl group, a C₆-C₁₀-aryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group,
and R¹⁷ is a cyclopentadienyl group, where R¹⁸ is 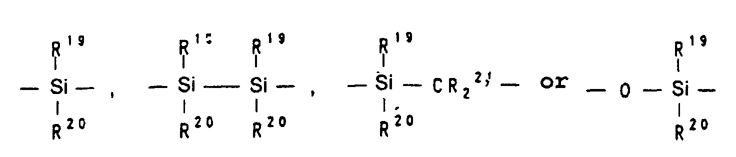 in which
R¹⁹, R²⁰ and R²¹ are identical or different and are a hydrogen atom, a halogen atom, a C₁-C₁₀-alkyl group, a C₁-C₁₀-fluoroalkyl group, a C₆-C₁₀-fluoroaryl group, a C₆-C₁₀-aryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group or R¹⁹ and R²⁰ or R¹⁹ and R²¹ in each case form a ring with the atoms connecting them.

2. The process as claimed in claim 1, where the polymerization is carried out in the liquid cycloolefin itself or in cycloolefin solution.

3. The process as claimed in claim 1 or 2, where the metallocene of the formula XI which is used is dimethylsilanediyl(9-(2,7-di-tert-butyl)-fluorenyl)-cyclopentadienylzirconium dichloride or mixtures with at least one other metallocene.

4. The process as claimed in one or more of claims 1 to 3, where the polycyclic olefin is norbornene or tetracyclododecene.

5. The process as claimed in one or more of claims 1 to 4, where a copolymer of norbornene and ethylene is prepared.

## Revendications

1. Procédé de préparation d'un homopolymère ou d'un copolymère de cydo-oléfine par polymérisation de 0,1-100% en poids, par rapport à la quantité totale de monomères, d'au moins une oléfine polycyclique de formules I, II, III, IV, V ou VI 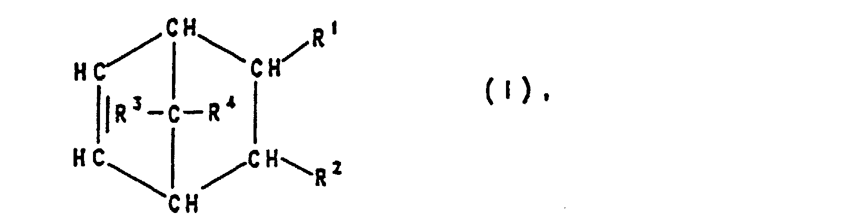 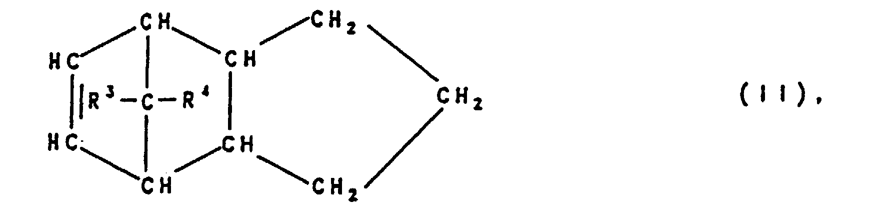 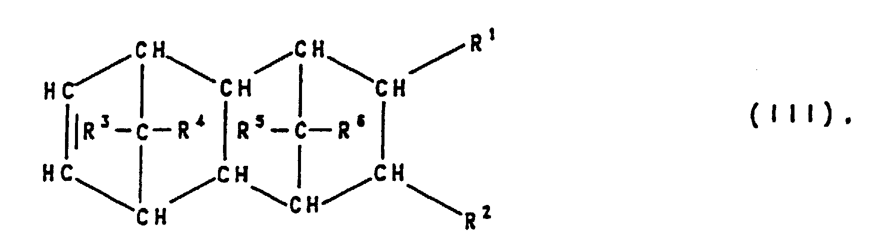 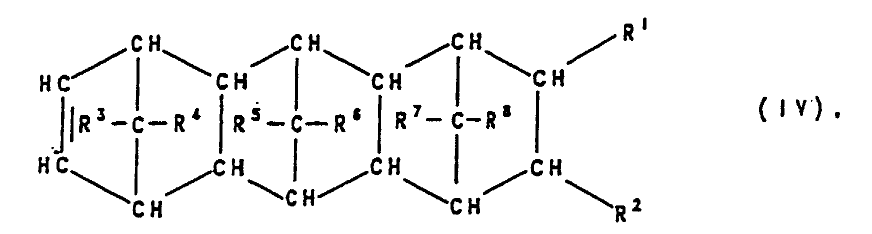 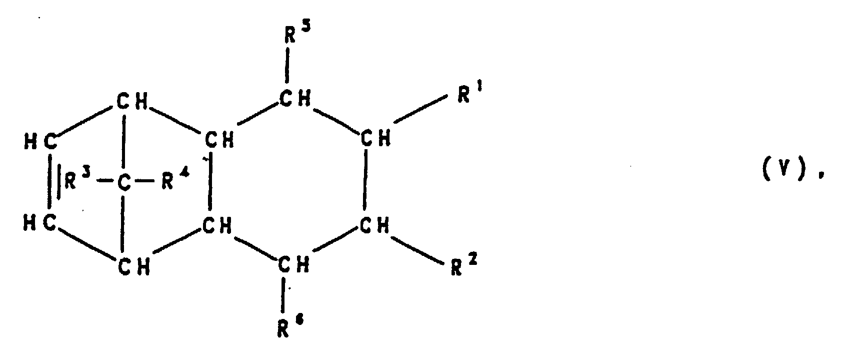 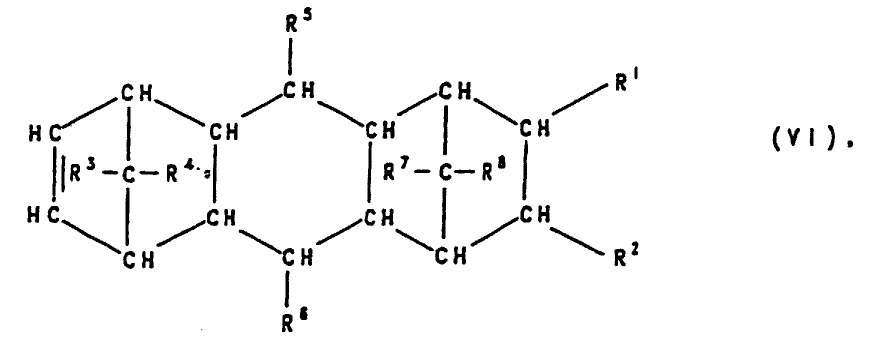 dans lesquelles R¹, R², R³, R⁴, R⁵, R⁶, R⁷ et R⁸ sont identiques ou différents et représentent un atome d'hydrogène ou un reste hydrocarboné, où les mêmes restes peuvent avoir des significations différentes dans les différentes formules, de 0-99,9% en poids, par rapport à la quantité totale des monomères, d'une cyclo-oléfine de formule VII 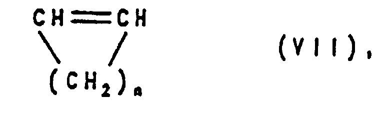 dans laquelle n est un nombre de 2 à 10, et de 0-99,9% en poids, par rapport à la quantité totale de monomères, d'au moins une 1-oléfine acyclique de formule VIII 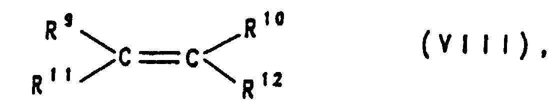 dans laquelle R⁹, R¹⁰, R¹¹ et R¹² sont identiques ou différents et représentent un atome d'hydrogène ou un reste hydrocarboné, à des températures de 20-150°C et sous une pression de 0,01-64 bar, en présence d'un catalyseur constitué d'un aluminoxane de formule IX 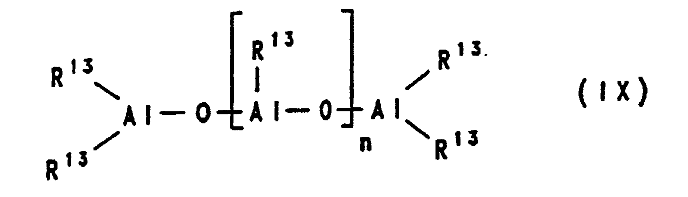 pour le type linéaire et/ou de formule X 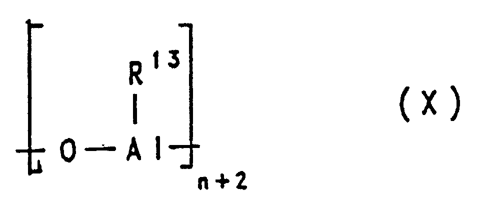 pour le type cyclique, où, dans les formules IX et X, R¹³ représente un groupement alkyle en C₁-C₆ ou phényle ou benzyle, et n est un nombre entier de 2-50, et d'au moins un métallocène de formule XI 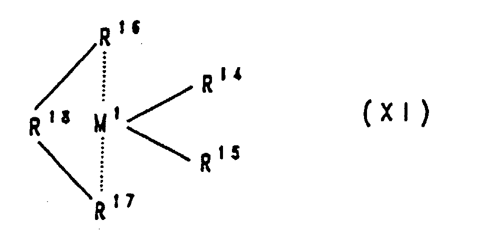 dans laquelle
M¹ représente un atome de titane, de zirconium, d'hafnium, de vanadium, de niobium ou de tantale,
R¹⁴ et R¹⁵ sont identiques ou différents et représentent un atome d'hydrogène, d'halogène, un groupement alkyle en C₁-C₁₀, alcoxy en C₁-C₁₀, aryle en C₆-C₁₀, aryloxy en C₆-C₁₀, alcényle en C₂-C₁₀, arylalkyle en C₇-C₄₀, ou arylalcényle en C₈-C₄₀,
R¹⁶ représente un groupement fluorényle substitué, portant un ou plusieurs restes R²², qui sont identiques ou différents et représentent un groupement alkyle en C₁-C₁₀, fluoralkyle en C₁-C₁₀, fluoraryle en C₆-C₁₀, aryle en C₆-C₁₀, alcoxy en C₁-C₁₀, alcényle en C₂-C₁₀, arylalkyle en C₇-C₄₀, arylalcényle en C₈-C₄₀ ou alkylaryle en C₇-C₄₀, et
R¹⁷ représente un groupement cyclopentadiényle, où
R¹⁸ représente 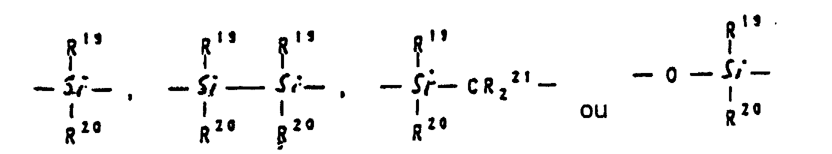
dans lesquelles
R¹⁹, R²⁰ et R²¹ sont identiques ou différents et représentent un atome d'hydrogène, d'halogène, un groupement alkyle en C₁-C₁₀, fluoralkyle en C₁-C₁₀, fluoraryle en C₆-C₁₀, aryle en C₆-C₁₀, alcoxy en C₁-C₁₀, alcényle en C₂-C₁₀, arylalkyle en C₇-C₄₀, arylalcényle en C₈-C₄₀ ou alkylaryle en C₇-C₄₀, ou bien R¹⁹, R²⁰ et R²¹ forment à chaque fois un cycle avec les atomes qui les relie.

2. Procédé selon la revendication 1, dans lequel la polymérisation est menée dans la cyclo-oléfine liquide ou dans une solution de cyclo-oléfine.

3. Procédé selon la revendication 1 ou 2, dans lequel on utilise, en tant que métallocène de formule XI, le dichlorure de diméthylsilandiyl(9-(2,7-ditert. butyl)fluorényl)cyclopentadiénylzirconium ou des mélanges comportant au moins un autre métallocène.

4. Procédé selon l'une quelconque des revendications 1 à 3, dans lequel l'oléfine polycyclique est le norbornène ou le tétracyclododécène.

5. Procédé selon l'une quelconque des revendications 1 à 4, dans lequel on prépare un copolymère à partir de norbornène et d'éthylène.
